# EUROPÄISCHE PATENTSCHRIFT

(11) **EP 4 429 991 B1**
(45) Veröffentlichungstag und Bekanntmachung des Hinweises auf die Patenterteilung: **22.04.2026**
(21) Anmeldenummer: 22830132.1
(22) Anmeldetag: 09.11.2022
(51) Int. Cl.: B66B 11/04

(54) **AUFZUGSANTRIEB UND AUFZUGSANLAGE**
ELEVATOR DRIVE AND ELEVATOR SYSTEM
MOTEUR D'ASCENSEUR ET ASCENSEUR

(30) Priorität: 09.11.2021 EP 21207033
(43) Veröffentlichungstag der Anmeldung: 18.09.2024
(73) Patentinhaber: INVENTIO AG, 6052 Hergiswil (CH)
(72) Erfinder: SCHMITT, Dominik, 6037 Root (CH)
(74) Vertreter: Inventio AG
(86) Internationale Anmeldenummer: PCT/EP2022/081233
(87) Internationale Veröffentlichungsnummer: WO 2023/083849

(56) Entgegenhaltungen:
- EP-A1- 3 240 752
- WO-A1-2009/075672
- WO-A1-2017/129849
- IT-A1- BO20 110 408
- US-A1- 2002 100 902

## Beschreibung

Die vorliegende Erfindung betrifft einen Aufzugsantrieb und eine Aufzugsanlage, die mindestens zwei der Aufzugsantriebe aufweist.

Bei einer herkömmlichen Aufzugsanlage zum Transportieren einer oder mehrerer Lasten, beispielsweise Personen oder Güter, über ein, zwei oder mehr Stockwerke ist ein Fahrkorb zum Aufnehmen der Last(en) in einem Aufzugschacht der Aufzugsanlage angeordnet. Ein Gegengewicht, das ebenfalls in dem Aufzugschacht angeordnet ist, ist über ein, zwei oder mehr Tragmittel, beispielsweise Seile oder Riemen, mit dem Fahrkorb gekoppelt. Ein Aufzugsantrieb zum vertikalen Verlagern des Fahrkorbs ist mit einer Treibscheibe gekoppelt, über die das bzw. die Tragmittel verlaufen, so dass der Fahrkorb und das Gegengewicht mittels Betreibens des Aufzugsantriebs vertikal verlagerbar sind. Ferner ist in der Regel eine Bremse angeordnet, mittels der der Fahrkorb und/oder die Gegengewichte abbremsbar und/oder feststellbar sind.

IT BO20 110 408 A1 offenbart eine Antriebseinheit für einen Aufzug oder einen Lastenaufzug, umfassend einen an einer Tragkonsole verankerbaren Tragkörper mit einem Basisteil, der mit Mitteln zur Kopplung an die Konsole versehen ist, einen Drehantrieb, der mit einem an dem Tragkörper befestigten Stator und einem schwenkbar mit dem Stator verbundenen Rotor versehen ist, um sich um seine eigene Drehachse zu drehen, im Gebrauch im Wesentlichen horizontal, eine mit dem Rotor verbundene Rolle, die gedreht wird und ein entsprechendes Seil bewegt, um einen Fahrkorb des Aufzugs anzuheben oder abzusenken, und eine mit der Rolle verbundene Bremse, die betätigt werden kann, um deren Drehung zu stoppen. Dieser Antrieb ist ein Elektromotor mit magnetischer Reluktanz.

Der Aufzugsantrieb ist herkömmlicher Weise insbesondere bei grossen Aufzuganlagen in einem Raum über dem Fahrzugschacht angeordnet, wobei eine Decke des Aufzugsschachts Ausnehmungen zum Durchführen der Tragmittel aufweist. Aufgrund der im Allgemeinen grossen Nominalnutzlasten derartiger Aufzugsanlagen werden dafür grosse, leistungsstarke Aufzugsantriebe benötigt, die in der Lage sind, den Fahrkorb und die Gegengewichte auch bei voller Last problemlos vertikal zu verlagern. Ein derart leistungsstarker Aufzugsantrieb weist in der Regel ein besonders grosses Gewicht auf. Daraus folgt, dass ein Verhältnis aus einem Gewicht des Aufzugsantriebs zur Nominalnutzlast entsprechend hoch ist. Beispiele typischer derartiger Verhältnisse sind:
128kg/450kg=0,28; mit einem Gewicht des Aufzugsantriebs von 128kg (exklusive Inverter) und einer Nominalnutzlast von 450kg;
135kg-145kg/680kg=0,19-0,21; mit einem Gewicht des Aufzugsantriebs von 135kg bis 145kg (exklusive Inverter) und einer Nominalnutzlast von 680kg;
175kg-185kg/800kg=0.19-0.23; mit einem Gewicht des Aufzugsantriebs von 175kg bis 185kg (exklusive Inverter) und einer Nominalnutzlast von 800kg;
209kg-228kg/1360kg=0.15-0.16; mit einem Gewicht des Aufzugsantriebs von 209kg bis 228kg und einer Nominalnutzlast von 1360kg.

Die bekannten Aufzugsantriebe weisen somit hohe Eigengewichte auf. Derartig schwere Aufzugsantriebe sind bei der Montage schwer zu handhaben, wobei grundsätzlich mehrere Personen und/oder Werkzeuge bzw. Maschinen zu deren Platzierung benötigt werden. Ferner müssen die Statik und insbesondere die Böden in den Räumen über den Fahrzeugschächten so ausgebildet sein, dass sie diesen Gewichten standhalten. Diese Räume benötigen an sich schon viel Platz und geeignete Böden weisen eine zusätzliche Dicke auf.

Somit kann es einen Bedarf für einen Aufzugsantrieb für eine Aufzugsanlage geben, der einfach handhabbar bzw. montierbar ist und/oder platzsparend untergebracht werden kann. Ferner kann ein Bedarf an einer entsprechend ausgestatteten Aufzugsanlage bestehen.

Einem solchen Bedarf kann durch den Gegenstand des unabhängigen Anspruchs entsprochen werden. Vorteilhafte Ausführungsformen sind in den abhängigen Ansprüchen und in der nachfolgenden Beschreibung sowie den begleitenden Figuren definiert.

Ein erster Aspekt der Erfindung betrifft einen Aufzugsantrieb für eine Aufzugsanlage.

Der Aufzugsantrieb weist einen Elektromotor auf, der ein Gehäuse aufweist, der als Permanentmagnet-Synchronmotor ausgebildet ist und der eine Motorwelle aufweist, die auf einem axialen Abschnitt ihrer Mantelfläche ausserhalb des Gehäuses eine Antriebszone zur Kopplung mit mindestens einem Tragmittel der Aufzugsanlage aufweist.

In einer bevorzugten Ausführungsform des Aufzugsantriebs ist ein Verhältnis aus einem Gewicht des Aufzugsantriebs zu einer Nominalnutzlast, für welche der Aufzugsantrieb ausgelegt ist, kleiner als 0,2.

Das Verhältnis kann beispielsweise kleiner als 0,15, beispielsweise kleiner als 0,12, beispielsweise 0.11 sein. Beispiele für mögliche Verhältnisse in Übereinstimmung mit der vorliegenden Erfindung können beispielsweise sein:
(28kg-32kg)/(630kg/2)=0,09-0,1; mit einem Gewicht des Aufzugsantriebs von 28kg bis 32kg (inklusive Inverter) und einer Nominalnutzlast von 630kg;
(25-27kg)/(480kg/2)= 0.1-0.11; mit einem Gewicht des Aufzugsantriebs von 25kg bis 27kg (inklusive Inverter) und einer Nominalnutzlast von 480kg.

Somit weist ein erfindungsgemässer Aufzugsantrieb beispielsweise ein Eigengewicht von typischerweise unter 50 kg, vorzugsweise zwischen 10 kg und 40 kg, zum Beispiel 25 kg bis 32 kg auf. Das Gewicht des Elektromotors kann hierbei wenigstens 60 %, vorzugsweise wenigstens 80 % und insbesondere wenigstens 90 % des gesamten Eigengewichts des Aufzugsantriebs ausmachen. Das Gewicht des Aufzugsantriebs wie vorangehend und im Folgenden beschrieben kann das Gewicht eines Inverters zur Ansteuerung des Elektromotors beinhalten. In einem bevorzugten Ausführungsform ist der Inverter als Teil des Aufzugsantriebs ausgeführt, das heisst beispielsweise am Elektromotor angebracht. Eine Nominalnutzlast, für welche der Aufzugsantrieb ausgelegt ist, gibt hierbei eine maximale Gewichtskraft an, die aufgrund von deren Auslegung und/oder Zulassung mittels dieses Aufzugsantriebs verlagert werden kann bzw. darf. In Aufzugsanlagen mit nur einem Aufzugsantrieb kann die Nominalnutzlast, für welche der Aufzugsantrieb ausgelegt ist, der Nominalnutzlast der Aufzugsanlage entsprechen. In einer Aufzugsanlage mit mehreren Aufzugsantrieben kann die Nominalnutzlast, für welche der Aufzugsantrieb ausgelegt ist, der Nominalnutzlast der Aufzugsanlage geteilt durch die Anzahl der Aufzugsantrieben entsprechen. Beispielsweise kann in einer Aufzugsanlage mit zwei identischen Aufzugsantrieben die Nominalnutzlast, für welche der Aufzugsantrieb ausgelegt ist, der Hälfte der Nominalnutzlast der Aufzugsanlage entsprechen. Die Nominalnutzlast korreliert hierbei unter anderem mit dem Gewicht des Gegengewichts bzw. der Gegengewichte sowie dem Gewicht des Fahrkorbs. Einzuhaltende Eigenschaften des Aufzugsantriebs für eine vorgegebene Nominalnutzlast werden hierbei durch verschiedene Normen und Vorschriften bestimmt wie zum Beispiel der europäischen Norm EN81. Die Nominalnutzlast einer Aufzugsanlage mit einem hierin beschriebenen Aufzugsantrieb kann typischerweise im Bereich von 50 kg bis 5 t, vorzugsweise 100 kg bis 2 t, insbesondere zwischen 300 kg und 1 t, liegen.

Die Nominalnutzlast, für welche der Aufzugausgelegt ist, kann auch als Nominalnutzlast, für welche der Motor ausgelegt ist, verstanden werden. Eine solche Nominalnutzlast umfasst nicht nur die Nutzlast des Aufzuges, sondern beinhaltet weiter auch das auf den Antrieb wirkende Eigengewicht der Aufzugsanlage. In diesem Fall ist die Nominalnutzlast also die Nominallast des Aufzugsantriebs.

Kleine, leistungsstarke Elektromotoren wurden zwar bereits in anderen Technologiebereichen beispielsweise für einen Einsatz in Kraftfahrzeugen entwickelt. Für einen Einsatz als Aufzugsantrieb in einer Aufzugsanlage wurden sie jedoch aus verschiedenen Gründen und Vorurteilen bisher nicht eingesetzt. Der Verwendung von mehreren kleinen Antrieben stand beispielsweise die dadurch entstehende Komplexität in der Ansteuerung dieser Aufzugsantriebe entgegen.

Der hierin beschriebene Aufzugsantrieb kann einfach gehandhabt werden, insbesondere von einer Person allein. Insbesondere kann der Aufzugantrieb derart klein und leicht sein, dass er unter Einhaltung geltender arbeitsrechtlicher Vorschriften während der Montage bzw. Wartung von einem einzelnen Techniker gehandhabt und insbesondere angehoben werden kann.

Des Weiteren kann ein derartiger Aufzugantrieb kompakt ausgebildet werden, wodurch er einen geringen Platzbedarf hat. Dies ermöglicht, den Aufzugsantrieb beispielsweise im Aufzugsschacht an einer Decke des Aufzugsschachts oder einer in dem Aufzugschacht aufgenommenen und beispielsweise zum Führen des Fahrkorbs und/oder der Gegengewichte vorgesehenen, selbsttragenden Konstruktion zu befestigen. Ein separater Maschinenraum über dem Aufzugsschacht zum Anordnen des Aufzugantriebs ist nicht nötig. Zum vertikalen Verlagern des Fahrkorbs und der Gegengewichte sind bevorzugt zwei der Aufzugsantriebe angeordnet, wie weiter unten näher erläutert.

Ein zweiter Aspekt der Erfindung betrifft eine Aufzugsanlage, aufweisend: einen Aufzugsschacht; einen Fahrkorb, der in dem Aufzugschacht angeordnet ist; mindestens zwei Gegengewichte, die in dem Aufzugschacht angeordnet sind und jeweils über ein Tragmittel mit dem Fahrkorb gekoppelt sind; mindestens zwei der Aufzugsantriebe gemäss dem ersten Aspekt der Erfindung, wobei die Tragmittel über je eine der Antriebszonen der Aufzugsantriebe so verlaufen, dass die Tragmittel mittels der Aufzugsantriebe bewegbar sind, so dass der Fahrkorb und die Gegengewichte mittels Betreibens der Aufzugsantriebe vertikal verlagerbar sind; und eine Bremse, insbesondere eine Kabinenbremse, mittels der der Fahrkorb und/oder die Gegengewichte abbremsbar und/oder feststellbar sind. Da die vorangehend und im Folgenden beschriebene Aufzugsanlage zwei Aufzugsantriebe umfasst, ist es besonders vorteilhaft eine Kabinenbremse vorzusehen.

Die Verwendung zweier Aufzugsantriebe zum Verlagern eines Fahrkorbs ermöglicht, die zu bewegenden Lasten auf zwei Aufzugsantriebe zu verteilen, sodass jeder der Aufzugsantriebe nur die halbe Last bewegen muss. Dies ermöglicht, jeden einzelnen der Aufzugsantriebe besonders klein und/oder leicht auszubilden. Ein derartiger Aufzugsantrieb kann besonders einfach gehandhabt werden, insbesondere von einer Person allein. Des Weiteren kann ein derartiger Aufzugantrieb besonders kompakt ausgebildet werden, wodurch er einen äusserst geringen Platzbedarf hat. Dies ermöglicht, den Aufzugsantrieb beispielsweise im Aufzugsschacht an einer Decke des Aufzugsschachts zu befestigen. Ein separater Raum über dem Aufzugsschacht zum Anordnen des Aufzugantriebs ist nicht nötig.

Die Aufzugsanlage kann beispielsweise ein Lasten- oder Personenaufzug sein. Die beiden Gegengewichte sind vorzugsweise gleich schwer. Die Tragmittel können jeweils ein, zwei oder mehr Seile und/oder Riemen aufweisen.

Merkmale des Aufzugsantriebs gemäss einer Ausführungsform des ersten Aspekts der Erfindung können im Schutzumfang des beigefügten Ansprüche auch Merkmale der Aufzugsanlage gemäss einer Ausführungsform des zweiten Aspekts der Erfindung sein und umgekehrt.

Gemäss einer Ausführungsform entspricht ein Aussendurchmesser der Antriebszone einem Aussendurchmesser der Motorwelle. Alternativ kann ein Verhältnis von Aussendurchmesser der Antriebszone zu Aussendurchmesser der Motorwelle kleiner als 1,4, bevorzugt kleiner 1,35, insbesondere kleiner 1,25 sein. In anderen Worten kann der Aussendurchmesser der Antriebszone im Wesentlichen dem Aussendurchmesser der Motorwelle entsprechen. Insbesondere kann bei dem hierin beschriebenen Aufzugsantrieb vorzugsweise auf eine herkömmliche Treibscheibe mit grossem Aussendurchmesser verzichtet werden. Dies trägt dazu bei, dass der Aufzugsantrieb besonders einfach, kompakt und leicht ausgebildet werden kann. Im Gegensatz zu herkömmlichen Aufzugsantrieben ist der erfindungsgemässe Aufzugsantrieb so gebaut, dass die Treibscheibe nicht abnehmbar ist. Dies ermöglicht es den Aufzugsantrieb noch kompakter zu bauen und weiter Gewicht einzusparen. Die Kosten, welche bei einem Treibscheibendefekt entstehen sind vergleichsweise klein, da der Aufzugsantrieb auch sonst kompakt gebaut ist und insbesondre mehrere, bevorzugt zwei Aufzugsantrieb pro Aufzugsanlage verwendet werden.

Anspruchsgemäss weist der Aufzugsantrieb weiter auf: eine Leiterplatte, die auf einer von der Antriebszone abgewandten Seite des Elektromotors senkrecht zur Motorwelle an dem Elektromotor angeordnet ist, und einen Inverter zur elektrischen Ansteuerung des Elektromotors, der auf der Leiterplatte angeordnet ist und mit dem Elektromotor elektrisch verbunden ist. Dies trägt dazu bei, dass der Aufzugsantrieb besonders einfach, kompakt und leicht ausgebildet werden kann. Ferner stellt das Anordnen der Leiterplatte mit dem Inverter auf der von der Antriebszone abgewandten Seite des Elektromotors eine thermische Trennung des Elektromotors von dem Inverter dar. Dies trägt zu einem besonders guten Wärmemanagement bei. Die Leiterplatte kann beispielsweise ein Printed-Circuit-Board (PCB) sein. Allgemein wird unter einer Leiterplatte im Sinne dieser Beschreibung jeglicher Träger von einem oder mehreren elektronischen Bauelementen und/oder elektrischen Leitungen verstanden. Auf bzw. mit der Leiterplatte kann beispielsweise eine Steuerung des Elektromotors implementiert sein. Der Inverter kann für eine Stromversorgung des Elektromotors dienen. So kann eine Aufzugsanlage einen Umrichter zur elektrischen Speisung des Aufzugsantriebs enthalten. Der Umrichter kann aus einem netzseitigen Gleichrichter (passiv oder aktive), einem DC-Bus mit einem Energiespeicher, beispielsweise einer Batterie und/oder einem Kondensator und einem elektromotorseitigen Inverter (auch Wechselrichter genannt) bestehen. Der Inverter ist mit dem DC-Bus elektrisch verbunden und erzeugt aus der DC-Bus-Spannung eine in Amplitude und/oder Frequenz variable Spannung zur Ansteuerung des Elektromotors.

Gemäss einer Ausführungsform ist die Leiterplatte auf einer ersten Seite der Leiterplatte mit dem Elektromotor mechanisch verbunden und auf einer von dem Elektromotor abgewandten zweiten Seite der Leiterplatte ist ein Kühlkörper des Aufzugsantriebs angeordnet, der in thermischen Kontakt mit dem Inverter ist und der erste Kühlrippen aufweist, die eine Zickzack-Form haben. Der thermische Kontakt ist beispielsweise durch einen direkten körperlichen Kontakt zwischen dem Inverter und dem Kühlkörper gegeben. Insgesamt kann die Kühlung des Aufzugsantriebs derart ausgelegt sein, dass zumindest an temperatursensitiven Bauteilen wie zum Beispiel einem STO-Modul (STO: safety torque off) oder den Halbleiterschaltern des Inverters während des wärmefreisetzenden Betriebs des Aufzugantriebs keine übermässigen Temperaturen von beispielsweise mehr als 80°C oder in manchen Fällen mehr als 90° auftreten.

Der Elektromotor und/oder der Inverter können beispielsweise ausschliesslich passiv gekühlt werden. Eine solche ausschliesslich passive Kühlung kann insbesondere dadurch ermöglicht sein, dass die gesamte Aufzugsanlage über zwei Aufzugsantriebe verfügt und somit jeder einzelne Aufzugsantrieb weniger leistungsstark sein braucht und somit weniger Verlustwärme erzeugt. Der Kühlkörper mit den Zickzack-förmigen ersten Kühlrippen ermöglicht eine besonders effiziente Abführung von Wärme, die beim Betrieb des Inverters entsteht. Der Kühlkörper trägt somit zu einem besonders guten Wärmemanagement bei. Ausserdem ist die Zickzack-Form besonders robust gegenüber Stössen oder anderen äusseren mechanischen Einwirkungen.

Gemäss einer Ausführungsform weist die Leiterplatte ein Safe-Torque-OFF-Modul auf, mittels dessen eine Energieversorgung des Elektromotors unterbrochen werden kann, so dass der Elektromotor kein Drehmoment mehr erzeugen kann. Das Safe-Torque-OFF-Modulkann auch als STO-Modul bezeichnet werden. Das STO-Modul kann dazu beitragen, dass im Falle eines Notfalls oder Ausfalls ein Sachschaden und/oder Personenschaden vermieden werden kann, in dem das STO-Modul den Inverter stromlos schaltet und somit die Erzeugung eines Drehmoments gestoppt wird. In einer Aufzugsanlage mit zwei Aufzugsantrieben kann jeder einzelne Aufzugsantrieb über ein eigenes Sicherheitsmodul verfügen. Das Sicherheitsmodul kann beispielsweise auf bzw. mit der oben beschriebenen Leiterplatte implementiert sein, wodurch sich Bauraum und/oder Kosten reduzieren lassen.

Gemäss einer Ausführungsform weist die Leiterplatte einen Encoder auf, der einen Magneten und einen Magnetfeldsensor aufweist. Der Magnet kann beispielsweise auf der Welle die Elektromotoren platziert sein, wobei der Magnetsensor so auf der Leiterplatte angeordnet ist, das er das Magnetfeld des Magneten gut erfassen kann. Der Encoder ermöglicht so auf besonders einfache und kompakte Weise, eine Drehgeschwindigkeit des Elektromotors zu erfassen.

Gemäss einer Ausführungsform weist die Leiterplatte auf ihrer ersten Seite einen ersten elektrischen Anschluss zur Verbindung mit einer Energiequelle und einen zweiten elektrischen Anschluss, der zum Empfangen und/oder Senden von elektrischen Signalen, mit dem Elektromotor, dem Sicherheitsmodul und/oder dem Encoder elektrisch verbunden ist, auf. Da die elektrischen Anschlüsse auf der ersten Seite der Leiterplatte, die dem Elektromotor zugewandt ist, angeordnet sind, sind auch die elektrischen Anschlüsse dem Elektromotor zugewandt. Dies bewirkt, dass beim Einstecken entsprechender Stecker in die elektrischen Anschlüsse kein zusätzlicher Platz für die Stecker ausserhalb des Bereichs des Aufzugsantriebs, sozusagen "hinter" dem Aufzugsantrieb, benötigt wird, da sich die Stecker in einem Raum zwischen der Leiterplatte und dem Elektromotor befinden. Ausserdem sind die Anschlüsse beispielsweise während der Montage oder Wartung der Aufzugsanlage für einen Techniker leicht zugänglich. Der Stecker ist somit auf der der Motorenwelle zugewandten Seite der Leiterplatte angeordnet.

Gemäss einer Ausführungsform ist der Inverter für eine Betriebsspannung kleiner als 60V konfiguriert. Die Betriebsspannung kann beispielsweise kleiner als 48V sein. Die Betriebsspannung ist vorteilhafterweise über 24V, bevorzugt über 36V, besonders bevorzugt über 42V. Diese Betriebsspannung bezieht sich auf die Betriebsspannung des Inverters und nicht auf die Betriebsspannung des Elektromotors. Die Verwendung niedriger Betriebsspannungen kann eine Sicherheit der Aufzugsanlage erhöhen. Ausserdem kann ein Aufzugsantrieb, der insbesondere mit seinem Inverter auf eine niedrige Betriebsspannung ausgelegt ist, gegebenenfalls auch mit Stromquellen wie beispielsweise kommerziell günstig erhältlichen Batteriepacks betrieben werden, wobei solche Stromquellen insbesondere als Notstromquelle im Falle eines Ausfalls des üblichen Stromnetzes dienen können. Solche Stromquellen können auch in Verbindung mit einer oder mehreren weiteren Stromquellen verwendet werden. Beispielsweise kann die Batteriepack-Stromquelle als unterstützend Stromquelle neben einer als Netzanschluss ausgebildeten weiteren Stromquelle dienen. Die Batteriepack-Stromquelle kann so dazu beitragen Leistungsspitzen zu versorgen, womit die Leistungsanforderungen an den Netzanschluss geringer ausfallen.

Gemäss einer Ausführungsform sind an einer Aussenseite des Gehäuses zweite Kühlrippen angeordnet, die sich in Richtung parallel zu einer Achse der Motorwelle erstrecken und die an mindestens einem ihrer axialen Enden abgewinkelt sind, wobei ein axialer Abschnitt des Gehäuses, der der Antriebszone zugewandt ist, frei von den zweiten Kühlrippen ist. Die zweiten Kühlrippen tragen zu einer besonders effizienten Kühlung des Elektromotors bei. Das Vorsehen der zweiten Kühlrippen kann insbesondere dazu beitragen, dass dem Aufzugsantrieb eine ausschliesslich passive Kühlung ausreicht.

Gemäss einer Ausführungsform weist das Gehäuse zur Verbindung mit einer Aufhängung der Aufzugsanlage an einer ersten Seite des Gehäuses eine mechanische Schnittstelle auf, die so ausgebildet ist, dass der Aufzugsantrieb auf der mechanischen Schnittstelle abgestellt werden kann. Alternativ oder zusätzlich weist das Gehäuse an einer von der ersten Seite des Gehäuses abgewandten zweiten Seite des Gehäuses eine Abstellfläche auf, die so ausgebildet ist, dass der Aufzugsantrieb auf der Abstellfläche abgestellt werden kann. Mechanische Komponenten oder Bereiche des Aufzugsantriebs, welche die mechanische Schnittstelle bzw. die Abstellfläche bilden, können hierbei vorzugsweise derart ausgelegt und/oder dimensioniert sein, dass sie das Gewicht des Aufzugsantriebs schädigungsfrei tragen können. Die Abstellfläche kann beispielsweise durch von der Motorwelle abgewandte Stirnflächen der zweiten Kühlrippen gebildet sein. Das Nutzen der mechanischen Schnittstelle als Abstellfläche und/oder die Abstellfläche selbst tragen dazu bei, dass der Aufzugsantrieb einfach abgestellt werden kann. Dies trägt dazu bei, dass ein Monteur, der den Aufzugsantrieb in dem Aufzugsschacht befestigen soll, den Aufzugsantrieb vereinfacht transportieren, handhaben und montieren kann.

Gemäss einer Ausführungsform weist die Antriebszone ein unebenes Profil auf. Anders ausgedrückt kann die Antriebszone von einer profilierten Oberfläche gebildet werden. Das Profil kann beispielsweise V-förmig sein und/oder ein, zwei oder mehr V-förmige Einkerbungen aufweisen. Die Unebenheiten des Profils, insbesondere die V-Förmigkeit, vergrössert eine Fläche der Antriebszone und damit eine Kontaktfläche zwischen Motorwelle und Antriebszone. Dies trägt dazu bei, dass die Haft- und Reibungskräfte zwischen dem Tragmittel und der Antriebszone besonders gross sind. Dies ermöglicht ein besonders sicheres und präzises vertikales Verlagern des Fahrkorbs mittels des Aufzugsantriebs. Insbesondere können die hohen Haft- und Reibungskräfte zu einer guten Traktion zwischen der Antriebszone und dem Tragmittel führen und dies, obwohl der Aussendurchmesser der Antriebszone bei dem hierin beschriebenen Aufzugsantrieb verhältnismässig klein sein kann.

Gemäss einer Ausführungsform der Aufzugsanlage umfasst diese eine Steuereinheit. Die Aufzugsantriebe können so ausgebildet sein, dass sie eine Antriebseinheit bilden, wobei die Aufzugsantriebe dazu insbesondere in einer Master-Slave-Konfiguration ausgebildet sind. Die Steuereinheit steuert die Antriebseinheit an als wären sie ein einziger Antrieb. In einer bevorzugten Ausführungsform sind die Aufzugsantriebe so ausgeführt, dass sie in entgegengesetzte Richtungen drehen.

Vorangehend und im Folgenden ist Antriebseinheit als eine funktionelle Einheit zu verstehen, in welcher mehrere (beispielsweise zwei) Aufzugsantriebe vereinigt sind, so dass sie von einer Steuereinheit regelungstechnisch, als ein Antrieb ansteuerbar sind. So können beispielsweise die Inverter zweier Antriebe so ausgebildet sein, dass einem der Inverter die Funktion Master zuordenbar ist. Dieser Inverter (Master) übernimmt die Kommunikation mit der Steuereinheit. Das heisst die Steuereinheit gibt diesem Inverter eine Soll-Wert, beispielsweise eine Soll-Geschwindigkeit vor. Der Master-Inverter gibt seinerseits dem zweiten Inverter (Slave) einen Soll-Wert, beispielsweise ein Soll-Drehmoment vor. Die beiden Inverter können in einer Ausführungsform in einem Gehäuse ausgebildet sein.

Dies ermöglicht auf einfache Weise eine synchrone Steuerung der beiden Aufzugsantriebe und ermöglicht es so den Aufzugsantrieb auf einfache Weise durch zwei vergleichsweise kleinere Aufzugsantriebe zu bewerkstelligen.

Die Aufzugsantriebe können in einer Ausführungsform abgestützt angeordnet sein. Insbesondere können die Aufzugsantriebe auf den Führungsschienen im Bereich des Schachtkopfs der Aufzugsanlage abgestützt sein.

Gemäss einer Ausführungsform der Aufzugsanlage sind die Aufzugsantriebe an einer Decke des Aufzugsschachts im Aufzugschacht hängend angeordnet.

Ein Bereich, der in dem Aufzugsschacht an die Decke angrenzt, kann auch als Schachtkopf bezeichnet werden. Somit können die Aufzugsantriebe im Schachtkopf hängend/abgestützt angeordnet werden. Dies ermöglicht, auf einen separaten Raum, insbesondere einen Maschinenraum, zum Anordnen der Aufzugsantriebe über dem Aufzugsschacht verzichten zu können. Dies trägt dazu bei, die gesamte Aufzugsanlage besonders kompakt ausbilden zu können.

Gemäss einer Ausführungsform der Aufzugsanlage ist mindestens ein Kabel zur Verbindung mit dem ersten oder zweiten elektrischen Anschluss der Leiterplatte von einer Seite des Gehäuses, das der Antriebszone zugewandt ist, über das Gehäuse zu dem entsprechenden ersten oder zweiten elektrischen Anschluss geführt. Dies ermöglicht, die Aufzugsantriebe besonders platzsparend anzuordnen, da kein zusätzlicher Platz ausserhalb des Bereichs der Aufzugsantriebe zum Anordnen der Kabel benötigt wird. Vielmehr werden die Kabel durch einen Bereich zwischen dem Elektromotor, der Leiterplatte und der Decke des Aufzugsschachts geführt.

Optional kann die Aufzugsanlage eine Steuervorrichtung zum Ansteuern der Aufzugsantriebe aufweisen. Die Steuervorrichtung kann einen Prozessor aufweisen, der dazu konfiguriert ist, die Aufzugsantriebe so anzusteuern, dass diese die entsprechenden Tragmittel und damit die Gegengewichte und den Fahrkorb synchron bewegen. Die Steuervorrichtung kann Hardware- und/oder Softwaremodule umfassen. Zusätzlich zum Prozessor kann die Steuervorrichtung einen Speicher und Datenkommunikationsschnittstellen zur Datenkommunikation mit Peripheriegeräten umfassen.

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Aufzugsanlage gemäss einem Ausführungsbeispiel der Erfindung.
Fig. 2 zeigt einen Aufzugsantrieb gemäss einem Ausführungsbeispiel der Erfindung.
Fig. 3 zeigt eine Detailansicht eines Teils eines Ausführungsbeispiels einer Antriebszone des Aufzugsantriebs gemäss Figur 2.
Fig. 4 zeigt einen Kühlkörper gemäss einem Ausführungsbeispiel der Erfindung.
Fig. 5 zeigt ein Ausführungsbeispiel zweier elektrischer Anschlüsse eines Inverters des Aufzugsantriebs gemäss Figur 2.

Die Figuren sind lediglich schematisch und nicht massstabsgetreu. Gleiche Bezugszeichen bezeichnen in den verschiedenen Figuren gleiche oder gleichwirkende Merkmale.

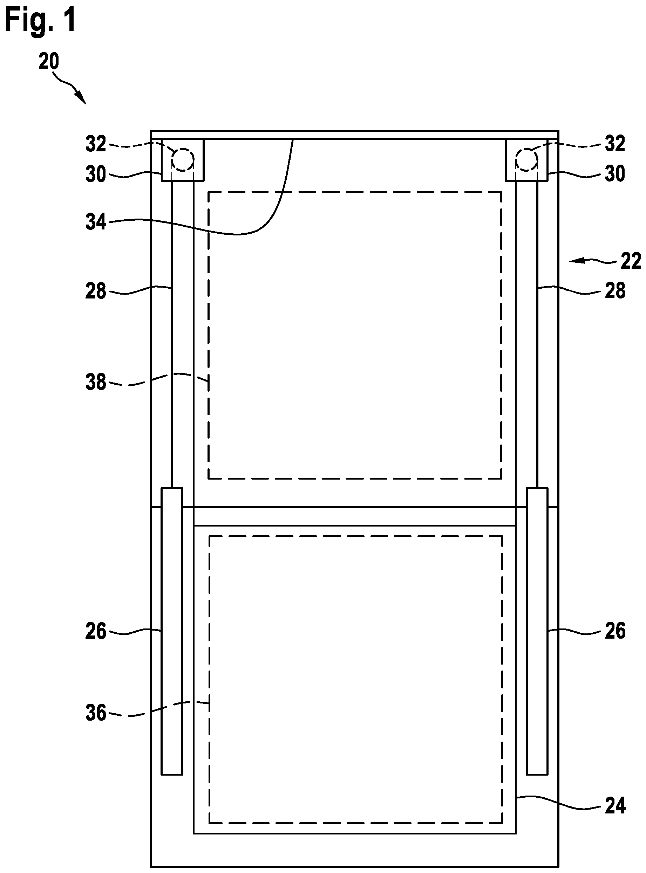

Fig. 1 zeigt ein Ausführungsbeispiel einer Aufzugsanlage 20, wie etwa einen Personen- oder Lastenaufzug. Die Aufzugsanlage 20 weist einen Aufzugsschacht 22, einen Fahrkorb 24, zwei Gegengewichte 26, zwei Aufzugsantriebe 30, die jeweils eine Motorwelle 32 aufweisen, Tragmittel 28 und eine Bremse (nicht gezeigt) auf. Die Aufzugsantriebe 30 sind im Bereich der Decke 34 des Aufzugsschachts 22 befestigt, insbesondere auf einer Führungsschiene des Aufzugs abgestützt (nicht gezeigt) oder an der Decke 34 des Aufzugsschachts 22 aufgehängt. Ein Bereich, der in dem Aufzugsschacht 22 an die Decke 34 angrenzt, kann auch als Schachtkopf bezeichnet werden. Somit sind die Aufzugsantriebe 30 im Schachtkopf abgestützt/hängend angeordnet. Die Tragmittel 28 können beispielsweise ein(en) oder mehrere Seile oder Riemen aufweisen.

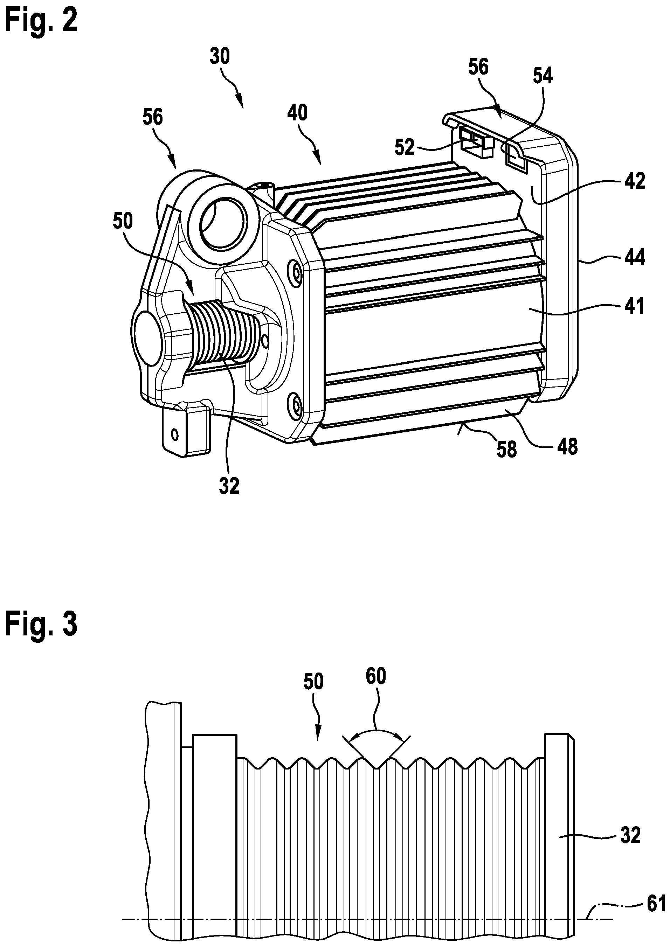

Der Fahrkorb 24 ist in dem Aufzugschacht 22 vertikal verlagerbar angeordnet. Die Gegengewichte 26 sind jeweils über die entsprechenden Tragmittel 28 mit dem Fahrkorb 24 verbunden. Die Motorwelle 32 dreht sich beim Betrieb des Elektromotors 30. Das Tragmittel 28 läuft über eine Antriebszone 50 (siehe Figur 2) auf der Motorwelle 32 und ist mittels der Antriebszone 50 bewegbar, so dass der Fahrkorb 24 und das Gegengewicht 26 mittels Betreibens des Elektromotors 30 in Zusammenwirken mit den Tragmittel 28 vertikal verlagerbar sind. Insbesondere ist der Fahrkorb 24 von einem ersten Stockwerk mit einem ersten Zugang 36 zu einem zweiten Stockwerk mit einem zweiten Zugang 38 oder umgekehrt vertikal verlagerbar. Optional kann sich der Aufzugsschacht 22 über mehr als zwei Stockwerke mit entsprechenden Zugängen erstrecken. Die Gegengewichte 26 sind vorzugsweise gleich schwer. Die Bremse ermöglicht ein Abbremsen und/oder Feststellen des Fahrkorbs 24. Alternativ oder zusätzlich kann eine weitere Bremse zum Abbremsen und/oder Feststellen des Gegengewichts 26 angeordnet sein.

Eine Steuervorrichtung (nicht gezeigt) zum Steuern des Aufzugsantriebs 30 und/oder der Bremse kann kommunikativ mit dem Aufzugsantrieb 30 bzw. der Bremse gekoppelt sein. Die beiden Aufzugsantriebe 30 können in einer Master-Slave-Konfiguration ausgebildet sein. Beispielsweise können die beiden Aufzugsantriebe 30 Drehmoment-gesteuert synchronisiert sein. Insbesondere werden die beiden Aufzugsantriebe 30 so angesteuert und/oder sind so zueinander synchronisiert, dass sie den Fahrkorb 24 vertikal ausgerichtet und die Gegengewichte 26 gleichmässig zueinander vertikal verlagern.

Fig. 2 zeigt einen Aufzugsantrieb 30 gemäss einem Ausführungsbeispiel der Erfindung. Der Aufzugsantrieb 30 entspricht dem mit Bezug zu Figur 1 erläuterten Aufzugsantrieb 30. Daher wird im Folgenden nur auf die Merkmale des Aufzugsantriebs 30 eingegangen, die noch nicht mit Bezug zu Figur 1 erwähnt wurden. Der Aufzugsantrieb 30 weist einen Elektromotor 40 auf, der ein Gehäuse 41 aufweist. Der Elektromotor 40 ist als Permanentmagnet-Synchronmotor ausgebildet und weist eine Motorwelle 32 auf. Die Motorwelle 32 weist auf einem axialen Abschnitt ihrer Mantelfläche ausserhalb des Gehäuses 41 die Antriebszone 50 zur Kopplung mit mindestens einem der Tragmittel 28 auf. Ein Aussendurchmesser der Antriebszone 50 entspricht im Wesentlichen einem Aussendurchmesser der Motorwelle 32. Alternativ dazu können die Motorwelle 32 und die Antriebszone 50 so ausgebildet sein, dass ein Verhältnis von Aussendurchmesser der Antriebszone 50 zu Aussendurchmesser der Motorwelle 32 kleiner als 1,4, bevorzugt kleiner 1,35, insbesondere kleiner 1,25. Anschaulich gesprochen kann der Aussendurchmesser der Antriebszone 50 im Wesentlichen dem Aussendurchmesser der Motorwelle 32 entsprechen. Ein Verhältnis aus einem Gewicht des Aufzugsantriebs 30 zur Hälfte einer Nominalnutzlast der Aufzugsanlage 20 ist kleiner als 0,2, beispielsweise kleiner als 0,15, beispielsweise kleiner als 0,12, beispielsweise 0.11.

Auf einer von der Antriebszone 50 abgewandten Seite des Elektromotors 40 ist eine Leiterplatte 42 (mit einem Gehäuse umgeben) angeordnet. Insbesondere ist die Leiterplatte 42 senkrecht zur Motorwelle 32 an dem Elektromotor 40 angeordnet. Die Leiterplatte 42 ist mit einer ersten Seite der Leiterplatte 42 dem Elektromotor 40 zugewandt und über ein Gehäuse, welches die Leiterplatte umgibt, mechanisch mit dem Elektromotor verbunden. Auf der Leiterplatte 42 ist ein Inverter vorhanden, der mit dem Elektromotor 40 elektrisch verbunden ist und diesen über einen DC-Bus mit einer in Amplitude und Frequenz variablen Spannung zur Erreichung eines vorgegebenen Drehmoments ansteuert. Der Inverter kann beispielsweise für eine Betriebsspannung (eingangsseitig) kleiner als 60V, beispielsweise kleiner als 48V, konfiguriert sein.

Der Inverter kann ein Sicherheitsmodul aufweisen. Mittels des Sicherheitsmoduls kann eine Energieversorgung des Elektromotors 40 unterbrochen werden, so dass der Elektromotor 40 kein Drehmoment mehr erzeugen kann. Das Sicherheitsmodul (auch STO-Modul genannt) kann beispielsweise in Form von Halbleiterschaltern oder Relais, welche die Steuereingänge der Halbleiterschalter des Inverters kurzschliessen können, implementiert sein. Die Leiterplatte 42, welche den Inverter und das STO-Modul aufweist kann weiter eine Encoder umfassen. Auf der Leiterplatte 42 ist dazu beispielsweise ein Magnetfeldsensor so positioniert, dass dieser das drehende Magnetfeld eines an der Motorenwelle angebrachten und mit diesem mit rotierenden Magneten erfassen kann. Der Encoder erlaubt es so die tatsächliche Bewegung der Motorenwellen zu messen.

Die Leiterplatte 42 kann auf ihrer ersten Seite einen ersten elektrischen Anschluss 52 und einen zweiten elektrischen Anschluss 54 aufweisen. Der erste elektrische Anschluss 52 ist zur Verbindung des Inverters mit einer Energiequelle konfiguriert. Der zweite elektrische Anschluss 54 ist zum Empfangen und/oder Senden von elektrischen Signalen mit dem Elektromotor 40, dem Sicherheitsmodul und/oder dem Encoder elektrisch verbunden. Da die beiden elektrischen Anschlüsse 52, 54 auf der ersten Seite der Leiterplatte 42 angeordnet sind, sind sie in Richtung hin zu dem Elektromotor 40 gewandt. Dies ermöglicht, ein, zwei oder mehr Kabel zur Verbindung mit dem ersten oder zweiten elektrischen Anschluss 52, 54 von einer Seite des Gehäuses 41, das der Antriebszone 50 zugewandt ist, über das Gehäuse 41 zu dem entsprechenden ersten oder zweiten elektrischen Anschluss 52, 54 zu führen. Somit können die Kabel platzsparend durch den Bereich zwischen dem Elektromotor 40, der Leiterplatte 42 und der Decke 34 des Aufzugsschachts 22 geführt werden und somit kurzgehalten werden.

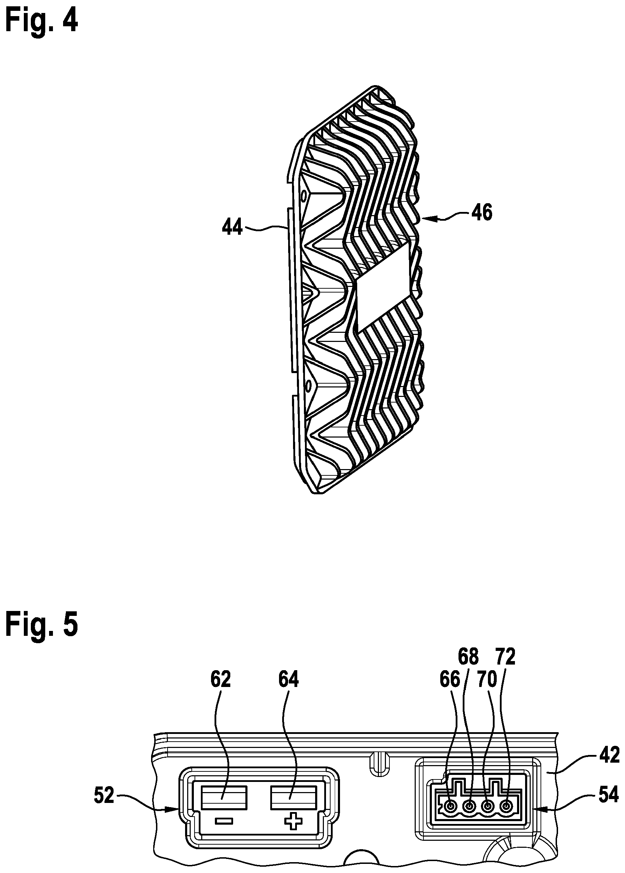

Auf einer von dem Elektromotor 40 abgewandten zweiten Seite der Leiterplatte 42 ist ein Kühlkörper 44 angeordnet, der in thermischen Kontakt, beispielsweise in direkten körperlichen Kontakt, mit dem Inverter und/oder STO-Modul, das heisst der Leiterplatte 42 ist. Der Kühlkörper 44 kann erste Kühlrippen 46 (siehe Figur 4) aufweisen. Die Leiterplatte 42 (insbesondere der Inverter und/oder das STO-Modul) kann mittels des Kühlkörpers 44 passiv gekühlt werden. Durch die Nähe des Kühlkörpers 44 zum Elektromotor 40 wird die Wärmebelastung des Elektromotoren 40 ebenfalls reduziert. Insbesondere wird die Hitze, welche auf der Leiterplatte entsteht an der zweiten (von der Maschine abgewandten Seite) abgeführt und somit sichergestellt, dass diese Hitze den Elektromotor nicht zusätzlich erwärmt. So kann ermöglicht werden, dass der Aufzugsantrieb kompakt gebaut werden kann und dennoch ausschliesslich passiv kühlbar ist.

An einer Aussenseite des Gehäuses 41 können zweite Kühlrippen 48 angeordnet sein. Die zweiten Kühlrippen 48 erstrecken sich in Richtung parallel zu einer Achse 61 (siehe Figur 3) der Motorwelle 32. Die zweiten Kühlrippen 48 können an mindestens einem ihrer axialen Enden abgewinkelt sein. Ein axialer Abschnitt des Gehäuses 41, der der Antriebszone 50 zugewandt ist, kann frei von den zweiten Kühlrippen sein. Optional kann der Elektromotor 40 mittels der zweiten Kühlrippen 48 ausschliesslich passiv gekühlt werden. Optional kann der Elektromotor 40 mittels des Kühlkörpers 44 und der zweiten Kühlrippen 48 ausschliesslich passiv gekühlt werden.

Das Gehäuse 41 kann zur Verbindung mit einer Aufhängung der Aufzugsanlage 20 an einer ersten Seite des Gehäuses 41, in Figur 2 an der Oberseite des Gehäuses 41, eine mechanische Schnittstelle 56 aufweisen. Alternativ kann das Gehäuse 41 an einer von der ersten Seite des Gehäuses 41 abgewandten zweiten Seite des Gehäuses 41 (in Figur 2 an einer Unterseite des Gehäuses 41) eine Abstellfläche 58 aufweisen, die so ausgebildet ist, dass der Aufzugsantrieb 30 sicher auf der Abstellfläche 58 abgestellt werden kann. Die Abstellfläche 58 kann beispielsweise durch die von der Motorwelle 32 abgewandte Stirnflächen der zweiten Kühlrippen 48 gebildet sein. Beispielsweise können sich mehrere diese Stirnflächen in einer Ebene befinden und zusammen die Abstellfläche 58 bilden. Weiter kann ein unterer Teil 57 der Schnittstelle 56 so ausgebildet sein, dass es beim Absetzten des Aufzugantriebs 30 ebenfalls Teil der Abstellfläche 58 bildet.

Fig. 3 zeigt eine Detailansicht eines Teils eines Ausführungsbeispiels der Antriebszone 50 des Aufzugsantriebs 30 gemäss Figur 2. Die Antriebszone 50 kann ein unebenes Profil aufweisen. Das Profil kann beispielsweise V-förmig sein und/oder ein, zwei oder mehr V-förmige Einkerbungen aufweisen. Die V-Formen der Einkerbungen können jeweils einen Öffnungswinkel 60 von beispielsweise 90 haben. Die Unebenheiten des Profils, insbesondere die V-Förmigkeit, vergrössert eine Fläche der Antriebszone 50 und damit eine Kontaktfläche zwischen Motorwelle 32 und Antriebszone 50. Aufgrund des V-förmigen Profils kann eine Traktion beim Antreiben eines geeignet komplementär ausgebildeten Treibmittels erhöht werden.

Fig. 4 zeigt den Kühlkörper 44 gemäss einem Ausführungsbeispiel der Erfindung. Der Kühlkörper 44 weist erste Kühlrippen 46 auf. Die ersten Kühlrippen 46 können eine Zickzack-Form haben. Die ersten Kühlrippen können beispielsweise jeweils eine Höhe von 8 mm oder mehr, beispielsweise über 10 mm, beispielsweise über 15 mm, und beispielsweise weniger als 30 mm haben. Der Kühlkörper 44 und/oder insbesondere die ersten Kühlrippen 46 können beispielsweise mittels eines additiven Herstellungsverfahrens hergestellt werden.

Fig. 5 zeigt ein Ausführungsbeispiel der beiden elektrischen Anschlüsse 52, 54 der Leiterplatte 42 des Aufzugsantriebs 30 gemäss Figur 2. Der erste elektrische Anschluss 52, der zum Verbinden des Inverters mit einer externen Energiequelle (nicht gezeigt) konfiguriert ist, kann beispielsweise einen Minuskontakt 62 und/oder einen Pluskontakt 64 aufweisen, wobei der Minuskontakt 62 auch als Masseanschluss bezeichnet werden kann. Der zweite elektrische Anschluss 54, der beispielsweise zum Verbinden des Inverters mit der Steuervorrichtung konfiguriert sein kann, kann beispielsweise einen ersten CAN-Kontakt 66, einen zweiten CAN-Kontakt 68, einen STO-Minuskontakt 70 und einen STO-Pluskontakt 72 aufweisen.

## Patentansprüche

1. Aufzugsantrieb (30) für eine Aufzugsanlage (20), der Aufzugsantrieb (30) aufweisend:
einen Elektromotor (40), der ein Gehäuse (41) aufweist, der als Permanentmagnet-Synchronmotor ausgebildet ist und der eine Motorwelle (32) aufweist, die auf einem axialen Abschnitt ihrer Mantelfläche ausserhalb des Gehäuses (41) eine Antriebszone (50) zur Kopplung mit mindestens einem Tragmittel der Aufzugsanlage (20) aufweist,
eine Leiterplatte (42), die auf einer von der Antriebszone (50) abgewandten Seite des Elektromotors (40) senkrecht zur Motorwelle (32) an dem Elektromotor (40) angeordnet ist, und
einen Inverter zur elektrischen Ansteuerung des Elektromotors mit dem Elektromotor (40) elektrisch verbunden ist, **dadurch gekennzeichnet, dass** der Inverter auf der Leiterplatte (42) angeordnet ist.

2. Aufzugsantrieb (30) nach Anspruch 1, wobei ein Verhältnis aus einem Gewicht des Aufzugsantriebs (30) zu einer Nominalnutzlast, für welche der Aufzugsantrieb (30) ausgelegt ist, kleiner als 0,2 ist.

3. Aufzugsantrieb (30) nach einem der vorangehenden Ansprüche, wobei
ein Aussendurchmesser der Antriebszone (50) einem Aussendurchmesser der Motorwelle (32) entspricht; oder
ein Verhältnis von Aussendurchmesser der Antriebszone (50) zu Aussendurchmesser der Motorwelle (32) kleiner als 1,4 ist.

4. Aufzugsantrieb (30) nach einem der vorhergehenden Ansprüche, wobei die Leiterplatte (42) auf einer ersten Seite der Leiterplatte (42) mit dem Elektromotor (40) mechanisch verbunden ist und wobei auf einer von dem Elektromotor (40) abgewandten zweiten Seite der Leiterplatte (42) ein Kühlkörper (44) des Aufzugsantriebs (30) angeordnet, der in thermischen Kontakt mit dem Inverter ist und der erste Kühlrippen (46) aufweist, die insbesondere eine Zickzack-Form haben.

5. Aufzugsantrieb (30) nach einem der vorhergehenden Ansprüche, wobei die Leiterplatte (42) ein Safe-Torque-OFF-Modul (STO-Modul) aufweist, mittels dessen eine Energieversorgung des Elektromotors (40) unterbrochen werden kann, so dass der Elektromotor (40) kein Drehmoment mehr erzeugen kann.

6. Aufzugsantrieb (30) nach einem der vorhergehenden Ansprüche, wobei die Leiterplatte (42) einen Encoder aufweist, der insbesondere einen Magneten und einen Magnetfeldsensor aufweist.

7. Aufzugsantrieb (30) nach einem der Ansprüche 5 oder 6, wobei die Leiterplatte (42) auf ihrer ersten Seite einen ersten elektrischen Anschluss (52) zur Verbindung mit einer Energiequelle und einen zweiten elektrischen Anschluss (54), der zum Empfangen und/oder Senden von elektrischen Signalen, mit der Leiterplatte, insbesondere mit dem Inverter, dem Elektromotor (40), dem Sicherheitsmodul und/oder dem Encoder elektrisch verbunden ist, aufweist.

8. Aufzugsantrieb (30) nach einem der vorhergehenden Ansprüche, wobei der Inverter für eine Betriebsspannung kleiner als 60V konfiguriert ist.

9. Aufzugsantrieb (30) nach einem der vorhergehenden Ansprüche, wobei
an einer Aussenseite des Gehäuses (41) zweite Kühlrippen (48) angeordnet sind, die sich in Richtung parallel zu einer Achse der Motorwelle (32) erstrecken und die insbesondere an mindestens einem ihrer axialen Enden abgewinkelt sind, und
wobei ein axialer Abschnitt des Gehäuses (41), der der Antriebszone (50) zugewandt ist, frei von den zweiten Kühlrippen (48) ist.

10. Aufzugsantrieb (30) nach einem der vorhergehenden Ansprüche, wobei
das Gehäuse (41) zur Verbindung mit einer Aufhängung der Aufzugsanlage (20) an einer ersten Seite des Gehäuses (41) eine mechanische Schnittstelle (56, 57) aufweist, die so ausgebildet ist, dass der Aufzugsantrieb (30) auf der mechanischen Schnittstelle (56, 57) abgestellt werden kann, und/oder
das Gehäuse (41) an einer von der ersten Seite des Gehäuses (41) abgewandten zweiten Seite des Gehäuses (41) eine Abstellfläche (58) aufweist, die so ausgebildet ist, dass der Aufzugsantrieb (30) auf der Abstellfläche (58) abgestellt werden kann.

11. Aufzugsantrieb (30) nach einem der vorhergehenden Ansprüche, wobei die Antriebszone (50) ein unebenes Profil aufweist.

12. Aufzugsanlage (20), aufweisend:
einen Aufzugsschacht (22);
einen Fahrkorb (24), der in dem Aufzugschacht (22) angeordnet ist;
mindestens zwei Gegengewichte (26), die in dem Aufzugschacht (22) angeordnet sind und jeweils über ein Tragmittel (28) mit dem Fahrkorb (24) gekoppelt sind;
mindestens zwei Aufzugsantriebe (30) nach einem der vorstehenden Ansprüche, wobei die Tragmittel (28) über je eine der Antriebszonen (50) der Aufzugsantriebe (30) so verlaufen, dass die Tragmittel (28) mittels der Aufzugsantriebe (30) bewegbar sind, so dass der Fahrkorb (24) und die Gegengewichte (26) mittels Betreibens der Aufzugsantriebe (30) vertikal verlagerbar sind; und
eine Bremse, insbesondere eine Kabinenbremse, mittels der der Fahrkorb (24) und/oder die Gegengewichte (26) abbremsbar und/oder feststellbar sind.

13. Aufzugsanlage (20) nach Anspruch 12, wobei diese eine Steuereinheit zur Steuerung der Aufzugsantriebe umfasst, wobei die Aufzugsantriebe (30) so ausgebildet sind, dass sie eine Antriebseinheit bilden, wobei die Aufzugsantriebe (30) dazu insbesondere in einer Master-Slave-Konfiguration ausgebildet sind, wobei die Steuereinheit die Antriebseinheit so ansteuert als wäre sie ein einziger Antrieb, wobei die Aufzugsantriebe (30) insbesondere in entgegengesetzte Richtung drehen.

14. Aufzugsanlage (20) nach einem der Ansprüche 12 oder 13, wobei die Aufzugsantriebe (30) in einem Schachtkopf angeordnet, insbesondere an den Führungsschienen abgestützt bzw. hängend an diesen angebracht sind.

15. Aufzugsanlage (20) nach einem der Ansprüche 12 bis 14, wobei mindestens ein Kabel zur Verbindung mit dem ersten oder zweiten elektrischen Anschluss (52, 54) der Leiterplatte (42) von einer Seite des Gehäuses (41), die der Antriebszone (50) zugewandt ist, über das Gehäuse (41) zu dem entsprechenden ersten oder zweiten elektrischen Anschluss (52, 54) geführt ist.

## Claims

1. Elevator drive (30) for an elevator system (20), the elevator drive (30) having: an electric motor (40) which has a housing (41) which is designed as a permanent magnet synchronous motor and which has a motor shaft (32) which has a drive zone (50) on an axial portion of its lateral surface outside the housing (41), for coupling to at least one suspension means of the elevator system (20), a printed circuit board (42) arranged perpendicular to the motor shaft (32) on the electric motor (40) on a side facing away from the drive zone (50), and an inverter for electrically controlling the electric is electrically connected to the electric motor (40), **characterized in that** the inverter is arranged on the printed circuit board (42)

2. Elevator drive (30) according to claim 1, wherein a ratio of a weight of the elevator drive (30) to a nominal payload for which the elevator drive (30) is designed is less than 0.2.

3. Elevator drive (30) according to any of the preceding claims, wherein
an outside diameter of the drive zone (50) corresponds to an outside diameter of the motor shaft (32); or
a ratio of the outside diameter of the drive zone (50) to the outside diameter of the motor shaft (32) is less than 1.4.

4. Elevator drive (30) according to one of the preceding claims, wherein the circuit board (42) is mechanically connected to the electric motor (40) on a first side of the circuit board (42), and wherein a heat sink (44) of the elevator drive (30) is arranged on a second side of the circuit board (42) facing away from the electric motor (40), which heat sink is in thermal contact with the inverter and comprises first cooling ribs (46), which in particular have a zigzag shape.

5. Elevator drive (30) according to one of the preceding claims, wherein the circuit board (42) has a Safe Torque OFF module (STO module) by means of which an energy supply of the electric motor (40) can be interrupted, so that the electric motor (40) can no longer generate any torque.

6. Elevator drive (30) according to one of the preceding claims, wherein the circuit board (42) has an encoder which in particular has a magnet and a magnetic field sensor.

7. Elevator drive (30) according to any of claims 5 or 6, wherein the circuit board (42) has, on its first side, a first electrical connection (52) for connection to an energy source and a second electrical connection (54) which is electrically connected to the circuit board, in particular to the inverter, the electric motor (40), the safety module, and/or the encoder, for receiving and/or transmitting electrical signals.

8. Elevator drive (30) according to one of the preceding claims, wherein the inverter is configured for an operating voltage of less than 60 V.

9. Elevator drive (30) according to any of the preceding claims, wherein
second cooling ribs (48) are arranged on an outer side of the housing (41), which extend in the direction in parallel with an axis of the motor shaft (32) and which are in particular angled at at least one of their axial ends, and
wherein an axial portion of the housing (41) facing the drive zone (50) is free of the second cooling ribs (48).

10. Elevator drive (30) according to any of the preceding claims, wherein
the housing (41) has a mechanical interface (56, 57) for connection to a suspension of the elevator system (20), on a first side of the housing (41), which mechanical interface is designed such that the elevator drive (30) can be placed on the mechanical interface (56, 57), and/or
the housing (41) has a deposition surface (58) on a second side of the housing (41) facing away from the first side of the housing (41), which deposition surface is designed such that the elevator drive (30) can be placed on the deposition surface (58).

11. Elevator drive (30) according to any of the preceding claims, wherein the drive zone (50) has an uneven profile.

12. Elevator system (20), comprising:
an elevator shaft (22);
an elevator car (24) which is arranged in the elevator shaft (22);
at least two counterweights (26) which are arranged in the elevator shaft (22) and are each coupled to the elevator car (24) via a suspension means (28);
at least two elevator drives (30) according to any of the preceding claims, wherein the suspension means (28) extend over one of the drive zones (50) of the elevator drives (30) in each case, in such a way that the suspension means (28) can be moved by means of the elevator drives (30), such that the elevator car (24) and the counterweights (26) can be displaced vertically by operation of the elevator drives (30); and
a brake, in particular a car brake, by means of which the elevator car (24) and/or the counterweights (26) can be braked and/or locked.

13. Elevator system (20) according to claim 12, wherein said elevator system comprises a control unit for controlling the elevator drives, wherein the elevator drives (30) are designed such that they form a drive unit, wherein for this purpose the elevator drives (30) are designed in particular in a master-slave configuration, wherein the control unit controls the drive unit as though it were a single drive, wherein the elevator drives (30) rotate in particular in the opposite direction.

14. Elevator system (20) according to any of claims 12 or 13, wherein the elevator drives (30) are arranged in a shaft head, in particular are supported on or suspended from the guide rails.

15. Elevator system (20) according to any of claims 12 to 14, wherein at least one cable for connection to the first or second electrical connection (52, 54) of the circuit board (42) is guided from one side of the housing (41), which faces the drive zone (50), via the housing (41), to the corresponding first or second electrical connection (52, 54).

## Revendications

1. Entraînement d'ascenseur (30) pour une installation d'ascenseur (20), l'entraînement d'ascenseur (30) comprenant :
un moteur électrique (40) qui comprend un boîtier (41), qui est conçu comme un moteur synchrone à aimant permanent et qui comprend un arbre moteur (32) qui présente, sur une partie axiale de sa surface d'enveloppe à l'extérieur du boîtier (41), une zone d'entraînement (50) pour le couplage avec au moins un moyen de support de l'installation d'ascenseur (20),
une carte de circuit imprimé (42) qui est disposée sur le moteur électrique (40) sur un côté du moteur électrique (40) opposé à la zone d'entraînement (50), perpendiculairement à l'arbre moteur (32), et
un onduleur pour la commande électrique du moteur électrique est relié électriquement au moteur électrique (40), **caractérisé en ce que** l'onduleur est disposé sur la carte de circuit imprimé (42).

2. Entraînement d'ascenseur (30) selon la revendication 1, dans lequel le rapport entre le poids de l'entraînement d'ascenseur (30) et une charge utile nominale pour laquelle l'entraînement d'ascenseur (30) est conçu est inférieur à 0,2.

3. Entraînement d'ascenseur (30) selon l'une des revendications précédentes, dans lequel
le diamètre extérieur de la zone d'entraînement (50) correspond au diamètre extérieur de l'arbre moteur (32) ; ou
le rapport entre le diamètre extérieur de la zone d'entraînement (50) et le diamètre extérieur de l'arbre moteur (32) est inférieur à 1,4.

4. Entraînement d'ascenseur (30) selon l'une des revendications précédentes, dans lequel la carte de circuit imprimé (42) est reliée mécaniquement au moteur électrique (40) sur un premier côté de la carte de circuit imprimé (42) et dans lequel, sur un deuxième côté de la carte de circuit imprimé opposé au moteur électrique (40), est disposé un dissipateur thermique (44) de l'entraînement d'ascenseur (30), qui est en contact thermique avec le convertisseur et qui comporte des ailettes de refroidissement (46) qui ont notamment une forme en zigzag.

5. Entraînement d'ascenseur (30) selon l'une des revendications précédentes, la carte de circuit imprimé (42) comportant un module Safe-Torque-OFF (module STO) au moyen duquel l'alimentation en énergie du moteur électrique (40) peut être interrompue, de sorte que le moteur électrique (40) ne peut plus générer de couple.

6. Entraînement d'ascenseur (30) selon l'une des revendications précédentes, dans lequel la carte de circuit imprimé (42) comprend un codeur qui comprend notamment un aimant et un capteur de champ magnétique.

7. Entraînement d'ascenseur (30) selon l'une des revendications 5 ou 6, dans lequel la carte de circuit imprimé (42) comporte, sur son premier côté, une première connexion électrique (52) pour la connexion à une source d'énergie et une deuxième connexion électrique (54) qui est relié électriquement à la carte de circuit imprimé, en particulier à l'onduleur, au moteur électrique (40), au module de sécurité et/ou au codeur, pour recevoir et/ou envoyer des signaux électriques.

8. Entraînement d'ascenseur (30) selon l'une des revendications précédentes, dans lequel l'onduleur est configuré pour une tension de service inférieure à 60 V.

9. Entraînement d'ascenseur (30) selon l'une des revendications précédentes, dans lequel
sur une face extérieure du boîtier (41) sont disposées des deuxièmes ailettes de refroidissement (48) qui s'étendent dans une direction parallèle à un axe de l'arbre moteur (32) et qui sont notamment coudées au niveau d'au moins une de leurs extrémités axiales, et
une partie axiale du boîtier (41) tournée vers la zone d'entraînement (50) étant exempte des deuxièmes ailettes de refroidissement (48).

10. Entraînement d'ascenseur (30) selon l'une des revendications précédentes, dans lequel
le boîtier (41) comporte, pour la liaison avec une suspension de l'installation d'ascenseur (20), sur un premier côté du boîtier (41), une interface mécanique (56, 57) qui est conçue de telle sorte que l'entraînement d'ascenseur (30) peut être posé sur l'interface mécanique (56, 57), et/ou
le boîtier (41) présente, sur un deuxième côté du boîtier (41) opposé au premier côté du boîtier (41), une surface de rangement (58) qui est conçue de telle sorte que l'entraînement d'ascenseur (30) peut être rangé sur la surface de rangement (58).

11. Entraînement d'ascenseur (30) selon l'une des revendications précédentes, dans lequel la zone d'entraînement (50) présente un profil irrégulier.

12. Installation d'ascenseur (20) comprenant :
une cage d'ascenseur (22) ;
une cabine (24) disposée dans la cage d'ascenseur (22) ;
au moins deux contrepoids (26) disposés dans la cage d'ascenseur (22) et couplés chacun à la cabine (24) par l'intermédiaire d'un moyen de support (28) ;
au moins deux entraînements d'ascenseur (30) selon l'une des revendications précédentes, les moyens de support (28) s'étendant chacun sur l'une des zones d'entraînement (50) des entraînements d'ascenseur (30) de telle sorte que les moyens de support (28) peuvent être déplacés au moyen des entraînements d'ascenseur (30), de sorte que la cabine (24) et les contrepoids (26) puissent être déplacés verticalement au moyen du fonctionnement des entraînements d'ascenseur (30) ; et
un freinage, en particulier un frein de cabine, au moyen duquel la cabine (24) et/ou les contrepoids (26) peuvent être freinés et/ou bloqués.

13. Installation d'ascenseur (20) selon la revendication 12, qui comprend une unité de commande basée sur ordinateur pour contrôler les entraînements d'ascenseur, les entraînements d'ascenseur (30) étant conçus de manière à former une unité d'entraînement, les entraînements d'ascenseur (30) étant notamment conçus à cet effet dans une configuration maître-esclave, l'unité de commande basée sur ordinateur contrôlant l'unité d'entraînement comme s'il s'agissait d'un entraînement unique, les entraînements d'ascenseur (30) tournant en particulier dans des sens opposés.

14. Installation d'ascenseur (20) selon l'une des revendications 12 ou 13, dans laquelle les entraînements d'ascenseur (30) sont disposés dans une tête de cage, en particulier appuyés sur les rails de guidage ou suspendus à ceux-ci.

15. Installation d'ascenseur (20) selon l'une des revendications 12 à 14, dans laquelle au moins un câble destiné à être raccordé à la première ou à la deuxième connexion électrique (52, 54) de la carte de circuit imprimé (42) est guidé depuis un côté du boîtier (41) qui est tourné vers la zone d'entraînement (50), via le boîtier (41), vers la première ou la deuxième connexion électrique correspondante (52, 54).
